# EUROPEAN PATENT APPLICATION

(11) **EP 4 071 206 A1**
(43) Date of publication of application: **12.10.2022**
(21) Application number: 21167485.8
(22) Date of filing: 08.04.2021
(51) Int. Cl.: C08K 9/04, C08L 7/00, C09C 1/04, C09C 3/08

(54) **COATED PARTICLES OF AN OXYGENATED ZINC COMPOUND**

(71) Applicant: Societe Industrielle Liegeoise des Oxydes SA, B-4480 Engis (BE)
(72) Inventor: Roumache, Olivier, 4500 Huy (BE); Grogna, Mathurin, 4480 Engis (BE)
(74) Representative: Gevers Patents

(57) **Abstract**

The present invention concerns coated particles of an oxygenated zinc compound], comprising a core at least partially coated by at least one coating layer; wherein said core comprises at least one compound OZ and said at least one coating layer comprises an organic material having a Hildebrand solubility parameter comprised between 10 (MPa)^{1/2} and 21 (MPa)^{1/2}.

## Description

### Field of the invention

The present invention relates to coated particles of an oxygenated zinc compound, their production and their use in a vulcanization process.

### Background of the invention

Vulcanization is a crosslinking reaction that occurs when a vulcanizable polymer is placed in the presence of a vulcanizing agent (usually sulfur) and thermal energy. The latter is necessary for the establishment of chemical bonds between the vulcanizing agent and the reactive sites of the molecular chains of the polymer, thus forming a three-dimensional network.

Once the polymer is vulcanized, it has specific mechanical and elastic properties suitable for use in various fields of application, for example in the tire manufacturing process.

In order to activate the vulcanization reaction between the polymer and the vulcanizing agent, it is known to use a vulcanization activator such as an oxygenated zinc compound, the most commonly used of which is zinc oxide, ZnO.

It is presumed that the activator combines with a vulcanization accelerator and stearic acid to generate an active complex. The latter then activates the sulfur compound involved in the vulcanization reaction and reduces the vulcanization time.

During the vulcanization process, it is important that the oxygenated zinc compound is homogeneously dispersed in the vulcanisable polymer. Indeed, an inhomogeneous distribution of oxygenated zinc compound risks generating a vulcanized polymer having an inhomogeneous crosslinks density. As this inhomogeneous distribution of oxygenated zinc compound is uncontrolled, the crosslinking density distribution in the vulcanized polymer is also not controlled. As a result, the vulcanized polymer exhibits an uncontrolled structure, which may have negative consequences on the mechanical properties of the vulcanized polymers and therefore on the quality of the final product (for example tires).

When used in polymeric materials, oxygenated zinc compounds can also have a role of filler, which like other pulverulent products (carbon black, chalk, kaolins, talc, etc.), makes possible to confer specific properties on the product (conductivity, improvement resilience, etc.). When such oxygenated zinc compounds are used as fillers it is very important to be able to disperse them very homogenously otherwise the final product may display poor, unwanted or uncontrolled variations in properties (such as mechanical properties such as elongation, tensile, density...).

The document WO2004/028972 A1 discloses an oxygenated zinc compound with improved flowability and dispersibility. The oxygenated zinc compound is in the form of microspherules which are made up of smaller particles having a D₅₀ of between 1 and 20 µm. When incorporating the microspherules into an elastomer matrix to be vulcanized, the micro-spherules break down, liberating these smaller unit particles into the elastomer matrix and allowing them to be dispersed therein. The microspherules are obtained by a process which comprises inter alia an injection step in an atomization chamber at a pressure comprised between 10 and 100 bars.

While the product and process described in this document show encouraging results, they still suffer from disadvantages. Firstly, the microspherules are not protected from the environment and thus moisture and impurities such as dust may, overtime affect the composition and the properties of the microspherules. This is especially problematic when the microspherules must be transported and/or stored for a long period of time or in humid regions or stored in poor conditions.

Secondly, the structure of the microspherules, being quite complex, renders their synthesis complicated. It requires special care and a drying step in an atomization chamber, which, from an industrial point of view, is costly.

There is thus a continuous need to provide a composition of an oxygenated zinc compound which can be easily dispersed in a polymer during a vulcanization process or when it is used as a filler. Moreover, the oxygenated zinc compound must not be easily altered by the environment so that it may be stored over long periods of time in any conditions (such as no humidity control). Furthermore, the composition must be obtainable by a simple and cost-efficient process and allow the use of an oxygenated zinc compound of simpler structure than microspherules.

### Invention Summary

The inventors have surprisingly found out that the present invention solves the abovementioned problems. The present invention concerns coated particles of an oxygenated zinc compound [hereinafter, compound OZ], comprising a core at least partially coated by at least one coating layer; wherein said core comprises at least one compound OZ and said at least one coating layer comprises an organic material having a Hildebrand solubility parameter comprised between 10 MPa^{1/2} and 21 MPa^{1/2}.

The present invention also concerns a process of manufacture of said coated particles of a compound OZ according to present invention.

The present invention further concerns the use of said coated particles of a compound OZ according to present invention in a vulcanization process.

The present invention further concerns the use of said coated particles of a compound OZ as a filler in a polymer material.

### Detailed description of the invention

Thus, the present invention concerns coated particles of an oxygenated zinc compound [hereinafter, compound OZ].

Within the context of the present invention, said compound OZ maybe be any oxygenated zinc compound known from the skilled in the art. The terms "oxygenated zinc compound" are intended to denote an inorganic compound comprising at least one zinc atom and at least one oxygen atom. Examples of compound OZ include but are not limited to zinc oxide, zinc hydroxide, zinc carbonate, zinc hydrogen carbonate, zinc hydroxycarbonate, zinc sulfate, and derivatives and combinations thereof. Preferably, said compound OZ may be selected from zinc oxide, zinc hydroxide, zinc carbonate, zinc hydroxycarbonate and combinations thereof. More preferably said compound OZ is a mixture of zinc oxide and zinc hydroxide.

Preferably, said coated particles have a D50, measured by laser granulometry in methanol, after an ultrasonic treatment of 3 minutes, of at least 1 nm, more preferably of at least 1.5 nm, even more preferably of at least 10 nm , even more preferably of at least 50 nm.

The notation Dx represents a diameter, expressed in µm, with respect to which X% by volume of the total volume of the particles measured consists of smaller particles. In the context of the present invention, all D50 measurements are measured by laser granulometry in methanol, after an ultrasonic treatment of 3 minutes.

Preferably, said coated particles have a D50, measured by laser granulometry in methanol, after an ultrasonic treatment of 3 minutes, of at most 100 nm, more preferably of at most 75 nm, even more preferably of at most 50 nm.

In a preferred embodiment, said coated particles have a D50, measured by laser granulometry in methanol, after an ultrasonic treatment of 3 minutes, of at least 1 nm and of at most 100 nm, more preferably of at least 1.5 nm and of at most 75 nm, even more preferably at least 10 nm and of at most 50 nm, even more preferably of 50 nm.

Preferably, said coated particles have a D50, measured by laser granulometry in methanol, after an ultrasonic treatment of 3 minutes, of at least 0.1 µm, more preferably of at least 0.2 µm, even more preferably of at least 0.5 µm.

Preferably, said coated particles have a D50, measured by laser granulometry in methanol, after an ultrasonic treatment of 3 minutes, of at most 500 µm, more preferably of at most 100 µm, even more preferably of at most 50 µm.

In another preferred embodiment, said coated particles have a D50, measured by laser granulometry in methanol, after an ultrasonic treatment of 3 minutes, of at least 0.1 µm and of at most 500 µm, more preferably of at least 0.2 µm and of at most 100 µm, even more preferably of at least 0.5 µm and at most 50 µm.

In an embodiment, said coated particles have a D50, measured by laser granulometry in methanol, after an ultrasonic treatment of 3 minutes, of at least 1 µm, or of at least 10µm, or of at least 40 µm, or of at least 100 µm, or of at least 500 µm, or of at least 1 mm.

In another embodiment, said coated particles have a D50, measured by laser granulometry in methanol, after an ultrasonic treatment of 3 minutes, of at most 9 mm, or of at most 5 mm, or of at most 500 µm, or of at most 60 µm, even more preferably of at most 20 µm.

In another preferred embodiment, said coated particles have a D50, measured by laser granulometry in methanol, after an ultrasonic treatment of 3 minutes, at least 1 µm and of at most 9mm, or at least 10µm and at most 5 mm, or at least 10µm and at most 500 µm, or at least 10 µm and at most 60 µm or at least 10 µm and at most 20 µm.

In another preferred embodiment, said coated particles have a D50, measured by laser granulometry in methanol, after an ultrasonic treatment of 3 minutes of at least 0.100 µm and at most 50 mm, more preferably of at least 0.200 µm and at most 1 mm, even more preferably of at least 0.200 µm and at most 500 µm.

Said coated particles comprise a core at least partially coated by at least one coating layer.

In particular, said coated particles may essentially be individually coated particles. Said coated particles according to the present invention are advantageous because they can be easily manipulated by the end user.

Said coated particles may be of any shape such as for example, spheres, rods, ellipsoids or a combination thereof. Preferably, said coated particles have a spherical shape.

If desired, the core may be almost totally or totally coated by said at least one coating layer. The BET surface area can be used in order to assess to which extent the core is coated by the at least one coating layer. The more the surface of the particles are coated, the lower is the BET surface area. Thus, the lower the BET surface area of the coated particles is, the more protected is the compound OZ from its environment.

Thus, the coated particles preferably have a BET surface area of at most 10 m²/g, more preferably at most 6 m²/g, even more preferably at most 4.5 m²/g, even more preferably at most 4 m²/g, even more preferably at most 3 m²/g.

It was observed that these values of BET surface area were advantageous because the core of said coated particles were well protected from the environment.

In the context of the present invention, all the BET surface area values of any products such as for example coated particles or any given compound are measured by adsorption manometry of a mixture of nitrogen and helium gas and calculated according to the BET method, after degassing under vacuum at 50° C for at least 1 hour.

In certain embodiments, the BET surface area of said coated particles may optionally be of at least or equal to 0.1 m²/g or at least 0.5 m²/g or at least 1 m²/g or of at least 2 m²/g.

In a preferred embodiment, the BET surface area of said coated particles is comprised between 0.1 and 5,5 m²/g, more preferably between 0.2 and 5 m²/g, more preferably between 0.25 and 4.5m²/g, even more preferably between 0.25 and 4 m²/g, even more preferably between 0.3 and 3 m²/g.

The core may optionally be at least partially coated by at least two or at least three or at least four coating layers.

The core of the coated particles comprises at least one oxygenated zinc compound.

The core may be of any shape such as for example a sphere, rod, ellipsoid or a combination thereof. The at least one compound OZ comprised in the core may comprise particles of said at least one compound OZ which may be aggregated or not. If desired, the core may as well comprise a continuous phase of the at least one compound OZ.

Preferably said coated particles comprise, relative to the total weight of said coated particles, at least 10 wt.%, more preferably at least 20 wt.%, even more preferably at least 30 wt.%, even more preferably at least 50wt.% of said at least one compound OZ.

If desired, said coated particles may comprise, relative to the total weight of said coated particles at most 99 wt.% or at most 95 wt.% or at most 80 wt.% or at most 70 wt.% of said at least one compound OZ .

In a preferred embodiment, said coated particles may comprise, relative to the total weight of said coated particles at least 10 wt.% and at most 99 wt.% of or at least 20 wt.% and at most 95 wt.% or at least 30 wt.% and at most 90 wt.% of said at least one compound OZ.

If desired, said compound OZ may have a BET surface area of at least 1 m²/g, preferably at least 2m²/g.

If desired, said compound OZ may have a BET surface area of at most 100m²/g, preferably at most 60m²/g.

In a preferred embodiment, said compound OZ has a BET surface area of at least 1 m²/g and at most 100 m²/g, preferably at least 2 m²/g and at most 60 m²/g.

Preferably, said compound OZ has a D50 measured by laser granulometry in methanol, after an ultrasonic treatment of 3 minutes of at least 0.25 µm, preferably at least 3 µm, more preferably at least 5 µm.

Preferably, said compound OZ, has a D50 measured by laser granulometry in methanol, after an ultrasonic treatment of 3 minutes of at most 5000µm, preferably at most 4000 µm, more preferably at most 3000 µm; at most 100 µm, at most 50 µm, at most 10 µm; at most 7 µm.

In a preferred embodiment, said compound OZ has a D50 measured by laser granulometry in methanol, after an ultrasonic treatment of 3 minutes of at least 0.25 µm and at most 4000 µm, at least 3 µm and at most 3000 µm, more preferably at least 5 µm and at most 100 µm, even more preferably at least 5 µm and at most 50 µm, even more preferably at least 5 µm and at most 10 µm, even more preferably at least 5 µm and at most 7µm.

The core may additionally comprise other compounds such as fillers. Thus, said core of said coated particles may comprise at least one filler. Examples of fillers include but are not limited to : Kaolin, Mica, gypsum, talk, wollastonite, silicates, calcium carbonate, clay, silica, carbon black and mixtures thereof.

If desired, said core of said coated particles may comprise at most 85 wt.% of said fillers, preferably at most 75 wt.% of said fillers, relative to the total weight of said coated particles. If desired, said core of said coated particles may comprise at least 10 wt.%, preferably at least 15 wt.%, more preferably at least 20 wt.%, relative to the total weight of said coated particles.

If desired, said core of said coated particles may comprise, relative to the total weight of said coated particles, at least 10 wt.% and at most 85 wt.%, preferably at least 15 wt.% and at most 75 wt.%, more preferably at least 20wt.% and at most 75 wt.% of said fillers.

In a preferred embodiment, the core of said coated particles comprise calcium carbonate as filler.

Preferably said calcium carbonate has a BET surface area of at least 0.5 m²/g, preferably at least 1 m²/g, more preferably at least 1.4 m²/g.

If desired, said calcium carbonate has a BET surface area of at most 15 m²/g, preferably at most 12 m²/g, more preferably at most 9 m²/g.

Preferably said calcium carbonate had a D50 measured by laser granulometry in methanol, after an ultrasonic treatment of 3 minutes of at least 0.5 µm, preferably at least 1 µm, more preferably at least 2 µm.

If desired, said calcium carbonate had a D50 measured by laser granulometry in methanol, after an ultrasonic treatment of 3 minutes of at most 30 µm, preferably at most 40 µm, more preferably at most 50 µm.

The at least one coating layer comprises an organic material having a Hildebrand solubility parameter of at least 10 MPa^{1/2} and at most 21 MPa^{1/2}.

The Hildebrand solubility is defined as the square root of the cohesive energy density, which is a characteristic of the intermolecular interactions in a pure liquid or solid. The Hildebrand solubility parameter is a known parameter which is disclosed in J. Brandrup et al., "Polymer Handbook", Fourth Edition, John Wiley & Sons, Inc, 2011, Chapter VII, Solubility Parameters Value, page 675 to page 711.

In other words, given the above value of Hildebrand solubility parameter, the organic material comprised in the at least one coating layer may preferably be considered as hydrophobic.

Thus, the organic material as defined in the present invention also has the advantage to protect the core of said coated particles from moisture since the at least one coating layer has particularly low affinity with water.

Preferably, said organic material has a Hildebrand solubility parameter of at least 11 MPa^{1/2}, more preferably of at least 12 MPa^{1/2}, even more preferably at least 13 MPa^{1/2}.

Preferably, said organic material has a Hildebrand solubility parameter of at most 20 MPa^{1/2}, more preferably of at most 19 MPa^{1/2}, even more preferably at most 18 MPa^{1/2}.

In a preferred embodiment, said organic material has a Hildebrand solubility parameter of at least 11 MPa^{1/2} at most 20 MPa^{1/2}, more preferably of at least and 12 MPa^{1/2} of at most 19 MPa^{1/2}, even more preferably of at least 13 MPa^{1/2} and at most 18 MPa^{1/2}.

Preferably, said organic material is soluble in a polymer such as polyethylene, polypropylene, polybutadiene, polyisoprene, EPDM (ethylene propylene diene monomer), natural rubber and mixtures thereof.

When the coated particles according to the present invention are used in a vulcanization process, the inventors surprisingly found that when the at least one coating layer comprises an organic material having a Hildebrand solubility parameter value as mentioned above, it facilitates obtaining a fast and homogenous dispersion of the oxygenated zinc compound into the vulcanizable polymer. This homogenous dispersion helps controlling the crosslinking density distribution in the vulcanized polymer. As a result, the structure of vulcanized polymer is better controlled and so are its mechanical properties.

Another surprising effect, is that the coating layer allows to increase the Apparent density of the coated particles to values higher than 500 g/L, preferably higher than 600 g/L, preferably higher than 700 g/L, preferably higher than 800 g/L, even more preferably higher than 1000 g/L.

Another surprising effect is that the coating layer allows to maintain a good flodex index. In particular, said coated particles may have a flodex index of at most 20, preferably at most 10.

The flodex is used to assess the flowability of a powder. The basis of this method is the ability of the powder to fall freely through a hole in a plate. The diameter of the smallest hole through which the powder passes three times in a row constitutes the flowability index.

The Flodex index is a test to measure the ease of flow of powders. The apparatus used is a receptacle in which the powder to be tested is placed and the bottom of which consists of a diaphragm with a calibrated opening through which it is observed whether there is flow of said powder. By successive tests, the minimum diameter through which this powder flows freely is determined. This diameter (in millimeters) corresponds to the Flodex index.

It has been observed that the coated particles may comprise low amount of dust.

Low amount of dust is shown by high D10.

Thus, said coated particles may have a D10 of at least 0.5 µm, at least 1 µm or at least 3 µm.

It was observed that the D10 of coated particles increases constantly with the amount of wax. This prove that the wax forms an additional layer that is surrounding the particles of OZ compound

The organic material can be any kind of organic material known by the skilled in the art, with the proviso that its Hildebrand solubility parameter is within the above ranges. Organic material according to the present invention may include but are not limited to polymers, waxes, paraffinic oil, naphtenic oil and fatty acids.

The term polymer denotes a molecule generally comprising repeating units derived from one or more monomers, linked to each other by at least one covalent bond. Preferably, said polymer is an organic polymer.

Polymers that may be used include but are not limited to: polystyrene, polyolefin such as polyethylene, polypropylene and polybutylene.

Fatty acids that may be used include but are not limited to C3-C28 saturated or unsaturated fatty acids, preferably C₁₀-C₂₈ saturated or unsaturated fatty acids, preferably C₁₆-C₂₄ saturated or unsaturated fatty acids, more preferable C₁₆-C₂₂ saturated or unsaturated fatty acids. Palm oil, stearic acid and oleic acid are particularly preferred fatty acids.

Waxes that may be used include but are not limited to: paraffin waxes, chlorinated paraffin waxes, microcrystalline waxes, polyolefin waxes, Fischer-Tropsch waxes, oxidized Fischer-Tropsch waxes, derivatives and mixtures thereof. This list of waxes have a low percentage of unsaturation or no unsaturation at all. Since the unsaturation can react during the vulcanization process, it is therefore clearly advantageous to use the organic materials as listed before. Indeed, their low or zero percentage of unsaturation makes it possible to limit side reactions during vulcanization and to better control the nature and / or the properties of the crosslinked polymer obtained after vulcanization.

In general, microcrystalline waxes are derived from petroleum and refined from wax residues (slack wax) to fractionate and separate the microcrystalline fraction.

Polyolefin waxes include, but are not limited to, polyethylene waxes, polypropylene waxes, polyethylene-polypropylene copolymer waxes, and mixtures thereof. Polyethylene and polypropylene waxes may generally have a number average molecular weight (Mn) of between 170 and 10,000 g / mol. Polyethylene waxes include but are not limited to polyethylene homopolymer waxes, thermally cracked polyethylene waxes, high density polyethylene waxes, low density polyethylene waxes, and mixtures thereof.

Fischer-Tropsch waxes are traditionally synthesized by the Fischer-Tropsch process. These synthetic waxes are made in a controlled environment using carbon monoxide and hydrogen as raw materials, mostly producing saturated hydrocarbon chains.

Preferably, said organic material has a congealing point of at least -40°C, more preferably at least 0°C, even more preferably at least 35°C; even more preferably at least 40 °C, even more preferably at least 50°C, even more preferably at least 60°C.

Preferably, said organic material has a congealing point of at most 150°C, more preferably at most 140°C, even more preferably at most 130°C.

Preferably, said organic material has a congealing point of at least -40°C and at most 150°C, more preferably at least 35°C and at most 140°C, even more preferably at least 40°C and at most 140°C, even more preferably at least 50°C and at most 140°C, even more preferably at least 60°C and at most 130°C.

In a preferred embodiment, said organic materials has a congealing point of at least 60°C and at most 130°C and a Hildebrand solubility parameter of at least 14 MPa^{1/2} and at most 20 MPa^{1/2}.

In a preferred embodiment, said organic material is selected from the group consisting of paraffin waxes, chlorinated paraffin waxes, microcrystalline waxes, polyolefin waxes, Fischer-Tropsch waxes, oxidized Fischer-Tropsch waxes, polyethylenes, polypropylenes, oleic acid, stearic acid, polybutylene, derivatives, and mixtures thereof.

Preferably, said at least one coating layer comprises, based on the total weight of said at least one coating layer, at least 90 wt.%, more preferably at least 95 wt.%, even more preferably at least 99 wt.% of said organic material.

If desired, said at least one coating layer may comprise, based on the total weight of said at least one coating layer, at most 100 wt.% or at most 99.8 wt.% or at most 99.5 wt.% of said organic material.

If desired, said at least one coating layer may comprise, based on the total weight of said at least one coating layer, at least 90 wt.% and at most 100 wt.%, more preferably at least 95 wt.% and at most 99.8 wt.%, even more preferably at least 98 wt.% and at most 99.5 wt.% of said organic material.

Preferably, said coated particles comprise, based on the total weight of said coated particles, at least 0.3 wt.%, more preferably at least 0.4 wt. %, more preferably at least 0.5 wt. %, more preferably at least 0.7 wt. %, more preferably at least 1 wt., even more preferably at least 2 wt. %,more preferably at least 3 wt. %, even more preferably at least 5 wt.%, even more preferably at least 6 wt.%, even more preferably at least 10 wt.% of said organic material.

If desired, said coated particles may comprise, based on the total weight of said coated particles, at most 30 wt.% or at most 20 wt.% or at most 18 wt.% or at most 15 wt.% or at most 10 wt.% or at most 9 wt.% or at most or at most 8 wt.% or at most 5 wt.% of said organic material.

When the coated particles are used in a vulcanization process, the above low amounts of said organic material allows to avoid influencing the composition that is being vulcanized.

If desired, said coated particles may comprise, based on the total weight of said coated particles, at least 0.3 wt.% and at most 30 wt.%, more preferably at least 0.7 wt.% and at most 20 wt.%, even more preferably at least 1 wt.% and at most 20 wt.%, even more preferably at least 2 wt.% and at most 18 wt.%, even more preferably at least 3 wt.% and at most 18 wt.% of said organic material.

In a preferred embodiment, said coated particles comprise a core at least partially coated by at least one coating layer; wherein said core comprises at least one compound OZ selected from zinc oxide, zinc hydroxide, zinc carbonate, zinc hydroxycarbonate and combinations thereof and said at least one coating layer comprises at least 95 wt.% of the organic material selected from the group consisting of polyethylene waxes and has a congealing point of at least 35°C and at most 130°C; said coated particles comprise at least 3 wt.% and at most 20 wt.% of said organic material and at least 80 wt.% and at most 97 wt.% of said compound OZ; said coated particles have a D50 measured by laser granulometry of at least 3 µm and at most 20 µm and a BET surface area of at most 4m²/g.

If desired, said coated particles may also be mixed with non-coated particles.

The present invention also concerns a process for forming said coated particles according to the present invention..

Thus, the present invention also concerns a process for forming coated particles of a compound OZ, said coated particles comprising a core comprising said compound OZ at least partially coated by at least one coating layer comprising an organic material, said process comprising the steps of:
(i) mixing particles of at least one compound OZ with at least one organic material wherein said at least one organic material has a Hildebrand solubility parameter comprised between 10 MPa^{1/2} and 21 MPa^{1/2}, at a temperature equal or greater than the congealing point of the at least one organic material, thereby forming a mixture (M);
(ii) solidifying said mixture (M), thereby forming said coated particles.

All the definitions, embodiments, preferences and preferred features described above regarding the coated particles, the compound OZ and the organic material in the context of said coated particles also apply to the process according to the present invention.

Preferably, in step (i), said organic material is a solid compound at a temperature below its congealing point and a flowing organic material when heated above said congealing point, more preferably a liquid organic material when heated above said congealing point.

Advantageously, said organic material has a viscosity of at least 3 cPs, preferably at least 5 cPs, more preferably at least 10 cPs, measured according to the ASTM D3236 standard at 149 ° C. Said organic material may have a viscosity of at most 2000 cPs, preferably at most 1800 cPs, more preferably at most 1600 cPs, even more preferably at most 1500 cPs, even more preferably at most 1300 cPs, even more preferably at most 1200 cPs measured according to ASTM D3236 at 149 ° C. More advantageously, said organic material may have a viscosity between 3 cPs and 2000 cPs, preferably between 5 cPs and 1800 cPs, more preferably between 10 cPs and 1600 cPs, even more preferably between 10 cPs and 1500 cPs, even more preferably between 10 cPs and 1300 cPs, even more preferably between 10 cPs and 1200 cPs measured according to standard ASTM D3236 at 149 ° C.

In an alternative embodiment, said organic material has a viscosity of at most 50 cPs, preferably at most 40 cPs, more preferably at most 30 cPs, even more preferably at most 20 cPs, measured according to ASTM D3236 at 149 ° C. Said organic material may have a viscosity of between 3 cPs and 50 cPs, preferably between 5 cPs and 40 cPs, more preferably between 10 and 30 cPs, even more preferably between 10 cPS and 20 cPs, measured according to the ASTM D3236 standard at 149 ° C.

In another particular embodiment, said organic material has a viscosity of at least 500 cPs, preferably at least 700 cPs, more preferably at least 900 cPS, even more preferably at least 1000 cPs, measured according to the ASTM D3236 standard at 149 ° vs. Said organic material may have a viscosity of between 500 cPs and 2000 cPs, preferably between 700 cPs and 1800 cPs, more preferably between 900 cPs and 1600 cPs, even more preferably between 1000 cPs and 1500 cPs, even more preferably between 1000 cPs and 1300 cPs, even more preferably between 1000 cPs and 1200 cPs measured according to the ASTM D3236 standard at 149 ° C.

In step (ii) said organic material is preferably solidified by cooling below the congealing point of said organic material. When said organic material is cooled below its congealing point, said organic material solidifies and stops flowing.
As already explained, the BET surface area can be used in order to assess to which extent the core of the coated particles is coated by the at least one coating layer.

Thus, preferably, before being mixed in step (i), said particles of at least one compound OZ have a BET of at least 1m²/g, more preferably at least 2 m²/g, more preferably at least 5 m²/g, more preferably at least 10 m²/g, even more preferably at least 20 m²/g, even more preferably at least 40 m²/g, even more preferably at least 50 m²/g.

If desired, said particles of at least one compound OZ may have a BET surface area of at most 100m²/g, preferably at most 60m²/g.

In a preferred embodiment, said particles of at least one compound OZ have a BET surface area of at least 10 m²/g and at most 100 m²/g, preferably at least 20 m²/g and at most 60 m²/g.

Preferably, after step (ii), the coated particles preferably have a BET surface area of at most 10 m²/g, more preferably at most 6 m²/g, even more preferably at most 4,5 m²/g, even more preferably at most 4 m²/g, even more preferably at most 3m²/g.

The low BET surface area shows that the core of the coated particles is totally coated by the organic material.

In certain embodiments, after step (ii), the BET surface area of said coated particles may optionally be of at least or equal to 0.1 m²/g or at least 0.5 m²/g or at least 1 m²/g or of at least 2 m²/g.

In a preferred embodiment, after step (ii), the BET surface area of said coated particles is comprised between 0.1 and 5,5 m²/g, more preferably between 0.2 and 5 m²/g, more preferably between 0.25 and 4.5m²/g, even more preferably between 0.25 and 4 m²/g, even more preferably between 0.3 and 3 m²/g.

Preferably, said mixture (M) comprises, based on the total weight of said mixture (M), at least 0.3 wt.%, more preferably at least 0.4 wt. %, more preferably at least 0.5 wt. %, more preferably at least 0.7 wt. %, more preferably at least 1 wt., even more preferably at least 2 wt. %,more preferably at least 3 wt. %, of said organic material.

If desired, said mixture (M) may comprise, based on the total weight of said mixture (M), at most 30 wt.% or at most 20 wt.% or at most 18 wt.% or at most 15 wt.% or at most 10 wt.% or at most 8 wt.% or at most 5 wt.% of said organic material.

If desired, said mixture (M) may comprise, based on the total weight of said mixture (M), at least 0.3 wt.% and at most 30 wt.%, more preferably at least 0.7 wt.% and at most 20 wt.%, even more preferably at least 1 wt.% and at most 20 wt.%, even more preferably at least 2 wt.% and at most 18 wt.%, even more preferably at least 3 wt.% and at most 18 wt.% of said organic material..

Preferably said mixture (M) comprises, relative to the total weight of said mixture (M), at least 10wt.%, more preferably at least 20wt.%, even more preferably at least 30wt.%, even more preferably at least 50wt.% of said at least one compound OZ.

If desired, said mixture (M) may comprise, relative to the total weight of said mixture (M) at most 99 wt.% of or at most 80 wt.% or at most 70 wt.% of said at least one compound OZ .

In a preferred embodiment, said mixture (M) may comprise, relative to the total weight of said mixture (M) at least 10 wt.% and at most 99 wt.% of or at least 20 wt.% and at most 95 wt.% or at least 30 wt.% and at most 90 wt.% of said at least one compound OZ.

Fillers may also be added to the mixture (M). Thus, the mixture (M) may comprise at least one filler. Examples of fillers include but are not limited to: Kaolin, Mica, gypsum, talk, wollastonite, silicates, calcium carbonate, clay, silica, carbon black and mixtures thereof.

If desired, said mixture (M) may comprise at most 85 wt.% of said fillers, preferably at most 75 wt.% of said fillers, relative to the total weight of said mixture (M). If desired, said core of said coated particles may comprise at least 10 wt.%, preferably at least 15 wt.%, more preferably at least 20 wt.%, relative to the total weight of said coated particles.

If desired, said mixture (M) may comprise, relative to the total weight of said mixture (M), at least 10 wt.% and at most 85 wt.%, preferably at least 15 wt.% and at most 75 wt.%, more preferably at least 20wt.% and at most 75 wt.% of said fillers.

The mixing step (i) can be performed by any technique known by the skilled in the art using any suitable device known by the skilled in the art.

Preferably, said process mixing step (i) is carried out in a heating mixer comprising a helicoidally shaped blade.

The solidifying step (ii) may be performed in any ways known by the skilled in the art. For example, by mixing said particles of said at least one compound OZ with the organic material at room temperature.

Preferably, the process according to the present invention comprises before said mixing step (i), a step of heating above the congealing point of said organic material said compound OZ.

Preferably, before or after said step of heating said compound OZ, and before said mixing step (i), said process comprises a step of adding said organic material to particles of at least one compound OZ

The present invention further concerns the use of said coated particles of a compound OZ according to present invention in a vulcanization process.

The present invention further concerns the use of said coated particles of a compound OZ as a filler in a polymer material.

All the definitions, preferences, particularities and embodiments described above for the coated particles of an oxygenated zinc compound according to the present invention also apply for the for forming said coated particles according to the present invention and to the use thereof in a vulcanization process or as a filler according to the present invention.

### Example 1 - coated particles preparation

A zinc oxide powder and calcium carbonate were added in a mixer with a helicoidal blade. The content of the mixer was heated to a temperature of 90°C, which is above the congealing point of paraffin. Then paraffin was added into the mixer and the content was stirred for 10 minutes. The surface area of the ZnO was of 32.7 m²/g. The surface area of the CaCO₃ was of 1.42 m²/g.

The content of the mixer was mixed in order to obtain a mixture which composition is shown in table 3. The wt.% are given relative to the total weight of the mixture (the content of the mixer).

**Table 1**

| **Sample** | **ZnO (%wt)** | **CaCO₃ (wt.%)** | **Wax (wt.%)** |
|---|---|---|---|
| 1 | 40 | 59 | 1 |
| 2 | 40 | 57 | 3 |
| 3 | 40 | 54 | 6 |
| 4 | 40 | 50 | 10 |

Then, the heating and the mixing were stopped, thus, the paraffin was allowed to solidify at room temperature (20°C).

Thus, the obtained coated particles had a core containing ZnO and CaCO₃ which was coated with paraffin. The characteristics of the coated particles are summarized in table 2.

**Table 2**

| **Sample** | **BET surface area (m²/g)** | **D10 (µm)** | **Flodex (mm)** | **Apparent density (g/L)** | **Tap density (g/L)** |
|---|---|---|---|---|---|
| 1 | 4,3 | 1,022 | 38 | 563 | 885 |
| 2 | 1,95 | 1,047 | >38 | 602 | 964 |
| 3 | 1,28 | 1,483 | 38 | 642 | 928 |
| 4 | 0,94 | 4,002 | 28 | 680 | 900 |

The calculated BET for a blend of ZnO and CaCO₃ without a coating is about 14m²/gr. The low BET surface area and D10 values show that a wax content as low as 1% can already fully coat the OZ particles.

In the context of the present invention, the tap density was measured according to norm ASTM B527 - 93. The tap density can also be measured by norms ISO 3953:2011 or DIN EN ISO 787-11.

In the context of the present invention, the apparent density was measured according to norm DIN ISO 697. The apparent density can also be measured by the norm DIN 53 466.

### Example 2 - coated particles preparation

A zinc oxide powder with calcium carbonate were added in a mixer with a helicoidal blade. The content of the mixer was heated to a temperature of 80°C, which is above the congealing point of paraffin. Then the wax was added into the mixer and the content was stirred for 10 minutes. The surface area of the ZnO was of 32.7 m²/g. The surface area of the CaCO₃ was of 1.42 m²/g.

Then, the heating and the mixing were stopped, thus, the paraffin was allowed to solidify at room temperature (20°C).

Thus, the obtained coated particles had a core containing ZnO and CaCO₃ which was coated with paraffin. The content of the mixer was mixed in order to obtain coated particles which composition is shown in table 3.

**Table 3**

| **Sample** | **ZnO (%wt)** | **CaCO₃ (%wt)** | **Wax (%wt)** | **BET (m²/g)** | **Apparent Density (g/L)** | **D10 (µm)** |
|---|---|---|---|---|---|---|
| 5 | 50 | 45 | 5 | 2,05 | 660 | 1,286 |
| 6 | 50 | 40 | 10 | 0,34 | 720 | 5,065 |
| 7 | 50 | 35 | 15 | <0,1 | 770 | 12,793 |
| 8 | 50 | 32 | 18 | <0,1 | 940 | 19,081 |
| 9 | 50 | 30 | 20 | <0,1 | 1050 | 36,754 |

A surprising effect is also observed: a higher density can be achieved by increasing the wax contents of the blend, as illustrated in table 3. This allows a lower volume storage, which is very advantageous in industrial transport and storage. A second surprising effect is that an increase in size of the smallest particles (D10) results in a lower dust production. Finally, the organic material coating the particles of ZnO is paraffin which has no affinity to water and thus protects the ZnO from humidity.

### Example 3- Use of the coated particles in a vulcanization process

A vulcanization process was carried out by mixing all the components shown in the table 4 in a mixer and a vulcanized rubber was obtained.

The amounts used of the various components are shown in Table 4.

**Table 4**

| **Components** | **Parts by weight** |
|---|---|
| Natural Rubber (TSR10) | 80 |
| Cis 1,4 polybutadiene (BR1220) | 20 |
| Carbon black (N347) | 55 |
| Naphtha oil | 7 |
| N-(1,3-dimethylbutyl)-N'-phenyl-p-phenylenediamine | 2 |
| 2,2,4-Trimethyl-1,2-Dihydroquinoline (TMQ) | 1 |
| Cyclohexyl-benzothiazole sulfonamide (CBS) | 0.8 |
| Sulfur | 2.3 |
| Stearic acid | 2.5 |
| Coated particles (example 1 sample 4) | 5 |

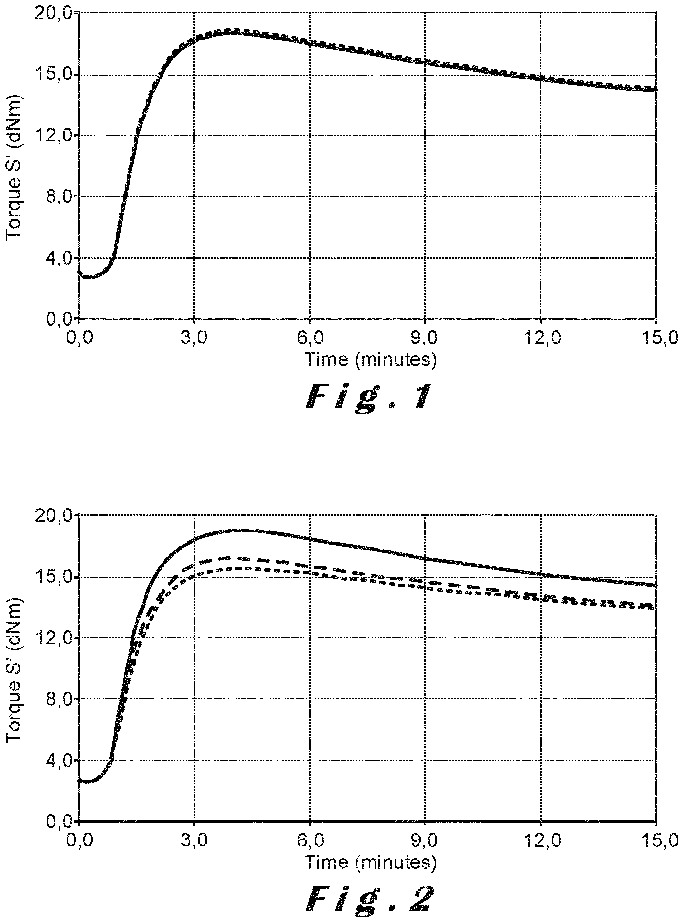

The obtained rubber was measured three times on an MDR2000 rheometer at 150 ° C. according to the method ASTM D2084 - 17 Standard Test Method for Rubber Property - Vulcanization Using Oscillating Disk Cure Meter. The resulting rheological curves are shown in Figure 1 and represent the torque S '(dNm) measured as a function of time (in minutes).

The obtained rubber had a great homogeneity in terms of ZnO and CaCO₃ dispersion. Dispersion homogeneity means uniform zinc and CaCO₃ density in the final mixture. In the case of this example, this results in rheological curves which are very close or being superimposed or quasi-superimposed. This also shows that the final mechanical properties of the obtained rubber are well defined and controlled.

### Comparative example - Use of uncoated ZnO in a vulcanization process

The process described in example 4 was repeated in an identical manner with the same components with the exception for the coated particles which were replaced by uncoated ZnO particles.

The uncoated ZnO particles were same as the ones used in example 1.

The obtained rubber was measured three times on an MDR2000 rheometer at 150 ° C. according to the method ASTM D2084 - 17 Standard Test Method for Rubber Property - Vulcanization Using Oscillating Disk Cure Meter. The resulting rheological curves are shown in Figure 2 and represent the torque S '(dNm) measured as a function of time (in minutes). Thus, the measurements conditions were identical as for the rubber of example 4.

As Figure 2 illustrates, the three rheological curves are not superposed and are quite far from each other which indicates poor homogeneity and poor control over the mechanical properties of the rubber.

## Claims

1. Coated particles of an oxygenated zinc compound [hereinafter, compound OZ], comprising a core at least partially coated by at least one coating layer; wherein said core comprises at least one compound OZ and said at least one coating layer comprises an organic material having a Hildebrand solubility parameter comprised between 10 (MPa)^{1/2} and 21 (MPa)^{1/2}.

2. Coated particles according to claim 1, wherein said organic material has a Hildebrand solubility parameter of at least 11 MPa^{1/2}, more preferably of at least 12 MPa^{1/2}, even more preferably at least 13 MPa^{1/2}.

3. Coated particles according to claim 1 or claim 2, wherein, said organic material has a Hildebrand solubility parameter of at most 20 MPa^{1/2}, more preferably of at most 19 MPa^{1/2}, even more preferably at most 18 MPa^{1/2}.

4. Coated particles according to any of the preceding claims, wherein said coated particles comprise, based on the total weight of said coated particles, at least 0.3 wt.%, more preferably at least 0.4 wt. %, more preferably at least 0.5 wt. %, more preferably at least 0.7 wt. %, more preferably at least 1 wt., even more preferably at least 2 wt. %,more preferably at least 3 wt. %, even more preferably at least 5 wt.%, even more preferably at least 6 wt.%, even more preferably at least 10 wt.% of said organic material.

5. Coated particles according to any of the preceding claims, wherein said coated particles comprise, based on the total weight of said coated particles, at most 30 wt.% or at most 20 wt.% or at most 18 wt.% or at most 15 wt.% or at most 10 wt.% or at most 8 wt.% or at most 5 wt.% of said organic material.

6. Coated particles according to any of the preceding claims, wherein said coated particles have a BET surface area of at most 10 m²/g, preferably at most 6 m²/g, more preferably at most 4.5 m²/g, even more preferably at most 4 m²/g, even more preferably at most 3 m²/ghaving a BET surface area of at most 10 m²/g.

7. Coated particles according to any of the preceding claims, wherein said coated particles have a BET surface area of at least or equal to 0.1 m²/g or at least 0.5 m²/g or at least 1 m²/g or of at least 2 m²/g.

8. Coated particles according to any of the preceding claims, wherein said compound OZ is selected from the group consisting of zinc oxide, zinc hydroxide, zinc carbonate, zinc hydrogen carbonate, zinc hydroxycarbonate, zinc sulfate, and combinations thereof.

9. Coated particles according to any one of claims 1 to 33, wherein said organic material is selected from the group consisting of paraffin waxes, chlorinated paraffin waxes, microcrystalline waxes, polyolefin waxes, Fischer-Tropsch waxes, oxidized Fischer-Tropsch waxes, polyethylenes, polypropylenes, oleic acid, stearic acid, polybutylene, paraffinic oil, naphtenic oil and mixtures thereof.

10. Coated particles according to any one of the preceding claims, wherein said core further comprising at least one filler selected from the group consisting of kaolin, mica, gypsum, talk, wollastonite, silicates, calcium carbonate, clay, silica, carbon black and mixtures thereof.

11. A process for forming coated particles of a compound OZ, said coated particles comprising a core comprising said compound OZ at least partially coated by at least one coating layer comprising an organic material, said process comprising the steps of:
(i) mixing particles of at least one compound OZ with at least one organic material wherein said at least one organic material has a Hildebrand solubility parameter comprised between 10 MPa^{1/2} and 21 MPa^{1/2}, at a temperature equal or greater than the congealing point of the at least one organic material, thereby forming a mixture (M);
(ii) solidifying said mixture (M), thereby forming said coated particles.

12. A process according to claim 11, wherein the BET surface area of said coated particles is comprised between 0.1 and 5,5 m²/g, more preferably between 0.2 and 5 m²/g, more preferably between 0.25 and 4.5m²/g, even more preferably between 0.25 and 4 m²/g, even more preferably between 0.3 and 3 m²/g.

13. A process according to claim 11 or claim 12, wherein said mixture (M) comprises, based on the total weight of said mixture (M), at least 0.3 wt.%, more preferably at least 0.4 wt. %, more preferably at least 0.5 wt. %, more preferably at least 0.7 wt. %, more preferably at least 1 wt., even more preferably at least 2 wt. %,more preferably at least 3 wt. %, of said organic material.

14. A process according to any one of claims 11 to 13, wherein said mixture (M) comprises, relative to the total weight of said mixture (M), at least 10 wt.%, more preferably at least 20 wt.%, even more preferably at least 30 wt.%, even more preferably at least 50 wt.% of said at least one compound OZ.

15. A process according to any one of claims 11 to 14, wherein said mixture (M) comprises, relative to the total weight of said mixture (M) at most 99 wt.% of or at most 80 wt.% or at most 70 wt.% of said at least one compound OZ .
